(19) Europäisches Patentamt
European Patent Office
Office européen des brevets

(11) **EP 4 446 369 A1**

(12) **EUROPEAN PATENT APPLICATION**
published in accordance with Art. 153(4) EPC

(43) Date of publication:
**16.10.2024 Bulletin 2024/42**

(21) Application number: **22904027.4**

(22) Date of filing: **24.11.2022**

(51) International Patent Classification (IPC):
*C08J 7/048* (2020.01)    *B32B 27/08* (2006.01)
*C08K 3/28* (2006.01)    *C08K 3/30* (2006.01)
*C08K 3/32* (2006.01)    *C08L 33/00* (2006.01)
*C08L 35/00* (2006.01)

(52) Cooperative Patent Classification (CPC):
**B32B 27/08; C08J 7/048; C08K 3/28; C08K 3/30;
C08K 3/32; C08L 33/00; C08L 35/00**

(86) International application number:
**PCT/JP2022/043263**

(87) International publication number:
**WO 2023/106096 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2021   JP 2021198355**

(71) Applicant: **DIC Corporation**
**Tokyo 174-8520 (JP)**

(72) Inventors:
• **OKUBO, Tomoo**
  **Sakura-shi, Chiba 285-8668 (JP)**
• **HARADA, Tomoaki**
  **Sakura-shi, Chiba 285-8668 (JP)**

(74) Representative: **Kraus & Lederer PartGmbB**
**Thomas-Wimmer-Ring 15**
**80539 München (DE)**

(54) **GAS BARRIER FILM AND PACKAGING MATERIAL**

(57)    The invention relates to a gas barrier film including a resin (A) containing a heteroatom compound having dehydration-condensation properties and a polymer having a carboxyl group, and a packaging material and a packaging material for heat sterilization including the gas barrier film. It is preferable that the gas barrier film includes a resin layer (B) containing a polyvalent metal compound to be adjacent to the resin layer (A), in which a resin for forming the resin layer (B) is one or more types selected from an ethyl cellulose resin, a polyether polyurethane polyol resin, a polyester polyol resin, and a polyurethane polyol resin.

**EP 4 446 369 A1**

**Description**

TECHNICAL FIELD

The present invention provides a film having gas barrier properties. In addition, a gas barrier film of the invention has a function of improving an adhesive strength with a laminate layer in laminate processing.

BACKGROUND ART

A packaging material used for packaging food, drug medicine, or the like is required to prevent the degeneration of contents, in particular, the oxidation due to oxygen. In response to such a request, in the related art, a barrier film containing a resin that is assumed to have comparatively high oxygen barrier properties, or a multilayer body (also referred to as a multilayer film or a laminate film) using the barrier film as a film base material is used.

In such barrier films, laminating an AlOx film, a SiOx film, an aluminum-deposited film, or an aluminum foil is widely performed in order to improve gas barrier properties or improve surface durability. However, there is a case where the laminate film using such a barrier film as the film base material is peeled off, and there is a need to improve an adhesive strength.

In order to resolve such problems, a method is known in which a polycarboxylic acid-based polymer layer and a polyvalent metal compound-containing layer are multilayered on a film base material to be adjacent to each other, a polyvalent metal salt of the polycarboxylic acid is generated by a reaction between two layers, and a gas barrier packaging material is adjusted (PTL 1). However, when producing such a gas barrier packaging material, a plurality of types of coating liquids are required, coating is required to be performed a plurality of times, and time and effort are required.

CITATION LIST

PATENT LITERATURE

PTL 1: JP2007-112114A

SUMMARY OF INVENTION

TECHNICAL PROBLEM

An object of the invention is to provide a gas barrier film that provides a high adhesive strength even when used as a film base material, and to provide a multilayer body that includes the gas barrier film and can be applied to a packaging material.

SOLUTION TO PROBLEM

As a result of intensive studies, the present inventors have found that the object described above can be attained by a gas barrier film containing a resin (A) containing a heteroatom compound having dehydration-condensation properties and a polymer having a carboxyl group.

[1] The invention provides a gas barrier film including a resin layer (A) containing a heteroatom compound having dehydration-condensation properties and a polymer having a carboxyl group.
[2] The invention provides the gas barrier film according to [1] further including a resin layer (B) containing a polyvalent metal compound to be adjacent to the resin layer (A), in which a resin for forming the resin layer (B) is one or more types selected from an ethyl cellulose resin, a polyether polyurethane polyol resin, a polyester polyol resin, and a polyurethane polyol resin.
[3] The invention provides the gas barrier film according to [1] further including a layer (C) containing a compound selected from the group consisting of an aluminum oxide, a silicon oxide, and a silicon nitride to be adjacent to the resin layer (A).
[4] The invention provides the gas barrier film according to [1], in which the polymer having a carboxyl group is one or more types of polymers selected from the group consisting of an acrylic acid, a methacrylic acid, a maleic acid, and an itaconic acid.
[5] The invention provides the gas barrier film according to [1], in which the heteroatom compound having dehydration-condensation properties is one or more types selected from the group consisting of a phosphoric acid, a sulfuric acid, and a nitric acid.

[6] The invention provides the gas barrier film according to [2], in which the polyvalent metal compound is one or more types selected from an oxide, a hydroxide, and a carbonate of a polyvalent metal selected from zinc, magnesium, and calcium.

[7] The invention provides the gas barrier film according to any of [2] to [6], in which the polyvalent metal compound is at least one type selected from zinc oxide, magnesium oxide, and calcium oxide.

[8] The invention provides a multilayer body including the gas barrier film according to any of [1] to [7].

[9] The invention provides a packaging material including the gas barrier film according to any of [1] to [7].

[10] The invention provides a packaging material for heat sterilization including the gas barrier film according to any of [1] to [7].

ADVANTAGEOUS EFFECTS OF INVENTION

The gas barrier film of the invention includes the resin layer (A) containing the heteroatom compound having dehydration-condensation properties and the polymer having a carboxyl group. Here, the heteroatom compound having dehydration-condensation properties improves adhesiveness by causing dehydration-condensation when brought into contact with a compound having a hydroxyl group. On the other hand, the polymer having a carboxyl group exhibits a function of forming an ionic bond when brought into contact with the polyvalent metal compound to improve the adhesiveness. By such a function, in a case where the gas barrier film of the invention is included in the configuration of the multilayer body, it is possible to improve adhesiveness between layers of a film to be configured and make the film rigid.

In addition, the multilayer body including the gas barrier film in the configuration is rigid and excellent in gas barrier properties, and thus, can be suitably used as the packaging material, in particular, a packaging material for food, a daily commodity, an electronic material, a medical purpose, or the like, which requires barrier properties.

Further, the multilayer body is also excellent in heat resistance and moist-heat resistance, and thus, can also be suitably used as the packaging material for heat sterilization such as boiling or retorting.

DESCRIPTION OF EMBODIMENTS

The invention relates to a gas barrier film containing a resin (A) containing a heteroatom compound having dehydration-condensation properties and a polymer having a carboxyl group. In addition, in this description, "to" indicates greater than or equal to a value described before "to" and less than or equal to a value described after "to".

<Heteroatom Compound Having Dehydration-Condensation Properties>

The heteroatom compound having dehydration-condensation properties used in the gas barrier film of the invention is a compound for causing dehydration-condensation when brought into contact with a compound having a hydroxyl group, and is a compound having a heteroatom in the structure. Examples of such a heteroatom compound having dehydration-condensation properties include a phosphoric acid, a sulfuric acid, and a nitric acid. The phosphoric acid, the sulfuric acid, and the nitric acid may be used alone, or a plurality thereof may be used together.

In the gas barrier film of the invention, the added amount of the heteroatom compound having dehydration-condensation properties is not particularly limited within a range where the effect of the invention is obtained, but it is preferable that 10 parts by mass or less of the heteroatom compound is contained in the gas barrier film, and it is particularly preferable that 4 to 6 parts by mass of the heteroatom compound is contained since adhesiveness when brought into contact with the compound having a hydroxyl group in the composition is further improved.

<Polymer Having Carboxyl Group>

The polymer having a carboxyl group used in the gas barrier film of the invention is a polymer containing a polymerizable unsaturated monomer (hereinafter, the "polymerizable unsaturated monomer" will be referred to as a "monomer") having a carboxyl group in the structure, as a polymerization raw material. Specific examples of the monomer having a carboxyl group in the structure include a (meth)acrylic acid, a β-carboxyethyl (meth)acrylate, and the like, and the (meth)acrylic acid is preferable. In addition, the carboxyl group in the invention may have a structure in which $H_2O$ molecules are lost from 2 molecules of the carboxylic acid as with a carboxylic acid anhydride. Note that, in the invention, the "(meth)acrylic acid" indicates one or both of an acrylic acid and a methacrylic acid, and the "(meth)acrylate" indicates one or both of acrylate and methacrylate.

An acid value of the polymer having a carboxyl group in the invention is not particularly limited within a range where the effect of the invention is obtained, but it is preferable that the acid value is 50 to 800 mgKOH/g since barrier performance is improved. In addition, it is more preferable that the acid value is 80 to 800 mgKOH/g, and in a case where the acid value is 80 mgKOH/g or more, an ionic bond sufficiently progresses and high barrier performance is obtained.

(Acid Value Measurement Method)

The acid value is the number of mg of potassium hydroxide required to neutralize an acid content in 1 g of a sample. Specifically, it is possible to measure the acid value by a method for dissolving the weighed sample in a suitable solvent that dissolves the sample, for example, a solvent at a volume ratio of Toluene/Methanol = 70/30, dropping several drops of 1% of a phenol phthalein alcohol solution, dropping 0.1 mol/L of a potassium hydroxide alcohol solution thereto, and checking a discoloration point, and it is possible to obtain the acid value by the following calculation equation.

(Acid Value Measurement Method-1)

$$\text{Acid Value (mgKOH/g)} = (V \times F \times 5.61)/S$$

V: the used amount (mL) of 0.1 mol/L of the potassium hydroxide alcohol solution
F: the titer of 0.1 mol/L of the potassium hydroxide alcohol solution
S: the sampled amount (g) of the sample
5.61: the equivalent amount (mg) of the potassium hydroxide in 1 mL of the potassium hydroxide alcohol solution of 0.1 mol/L

In a case where the sample is a resin solution, it is possible to obtain a resin acid value (mgKOH/g) by the following calculation equation.

Resin Acid Value (mgKOH/g) = Resin Solution Acid Value (mgKOH/g)NV (%) × 100 NV: a non-volatile content (%)

In addition, in a case where the solubility of the sample with respect to an organic solvent is low, and the measurement is difficult due to precipitation or the like, the acid value can also be measured by the following method.

(Acid Value Measurement Method-2)

The acid value (mgKOH/g-resin) is a value calculated by the following equation using FT-IR (manufactured by JASCO Corporation, FT-IR4200) and using a coefficient (f) obtained from a calibration curve created by a chloroform solution of a maleic acid anhydride, an absorbance (I) of an expansion and contraction peak (1780 cm-1) of an anhydride ring of the maleic acid anhydride in a maleic acid anhydride-modified polyolefin solution and an absorbance (II) of an expansion and contraction peak (1720 cm-1) of a carbonyl group of a maleic acid.

Acid Value (mgKOH/g-regin) = [(Absorbance (I) × (f) × 2 × Molecular Weight of Potassium Hydroxide × 1000 (mg) + Absorbance (II) × (f) × Molecular Weight of Potassium Hydroxide × 1000 (mg))/Molecular Weight of Maleic Acid Anhydride] Molecular Weight of Maleic Acid Anhydride: 98.06, Molecular Weight of Potassium Hydroxide: 56.11
The molecular weight of the polymer having a carboxyl group of the invention is not particularly limited, but it is preferable that a weight average molecular weight is 300 to 1000000 from the viewpoint that coated film formability is excellent. It is particularly preferable that the weight average molecular weight is 500 to 500000.
The weight average molecular weight of the polymer having a carboxyl group of the invention can be calculated by performing measurement with a method of gel permeation chromatograph (GPC).
The resin skeleton of the polymer having a carboxyl group is not particularly limited within a range where the effect of the invention is obtained, and the polymer may be a homopolymer of a polymerizable unsaturated monomer having a carboxyl group, or may be a copolymer using a plurality of polymerizable unsaturated monomers having a carboxyl group. In addition, the polymer may be a copolymer between the polymerizable unsaturated monomer having a carboxyl group and other copolymerizable monomers. As the polymer having a carboxyl group used in the invention, one or more types of polymers selected from the group consisting of an acrylic acid, a methacrylic acid, a maleic acid, and an itaconic acid are preferable.

((Meth)Acrylic Acid Polymer)

The (meth)acrylic acid polymer may be a polymer of a (meth)acrylic acid monomer, and for example, polyethers such as ethylene glycol di(meth)acrylate, polyethylene glycol (meth)acrylates, ethylene oxide-modified 4,4-dihydroxydiphenyl sulfone di(meth)acrylate, and ethylene oxide-modified bisphenol A di(meth)acrylate, ethylene glycol diglycidyl di(meth)acrylate, and ethylene oxide-modified bisphenol A diglycidyl di(meth)acrylate are used.

(Carboxyl Group-Containing Vinyl Polymer)

Examples of a carboxyl group-containing vinyl polymer resin include a polymer of the polymerizable unsaturated monomer having a carboxyl group. Examples of the polymerizable unsaturated monomer having a carboxyl group include unsaturated carboxylic acids such as a (meth)acrylic acid, 2-carboxyethyl (meth)acrylate, a crotonic acid, an itaconic acid, a maleic acid, or a fumaric acid;

monoesters (half esters) between various unsaturated dicarboxylic acids such as monomethyl itaconate, mono-n-butyl itaconate, monomethyl maleate, mono-n-butyl maleate, monomethyl fumarate, and mono-n-butyl fumarate and saturated monohydric alcohols;
monovinyl esters of various saturated dicarboxylic acids such as monovinyl adipate or monovinyl succinate;
an addition react product between anhydrides of various saturated polycarboxylic acids such as a succinic acid anhydride, a glutaric acid anhydride, a phthalic acid anhydride, or a trimellitic acid anhydride and various hydroxyl group-containing vinyl-based monomers; and various monomers obtained by an addition reaction between various carboxyl group-containing monomers as described above and lactones.

Examples of the monomer copolymerizable with the polymerizable unsaturated monomer having a carboxyl group include the followings.

(1) (meth)acrylic acid esters having an alkyl group having 1 to 22 carbon atoms such as methyl (meth)acrylate, ethyl (meth)acrylate, propyl (meth)acrylate, n-butyl (meth)acrylate, t-butyl (meth)acrylate, hexyl (meth)acrylate, heptyl (meth)acrylate, octyl (meth)acrylate, nonyl (meth)acrylate, decyl (meth)acrylate, dodecyl (meth)acrylate, tetradecyl (meth)acrylate, hexadecyl (meth)acrylate, stearyl (meth)acrylate, octadecyl (meth)acrylate, and docosyl (meth)acrylate;
(2) (meth)acrylic acid esters having an aliphatic alkyl group such as cyclohexyl (meth)acrylate, isobornyl (meth)acrylate, dicyclopentanyl (meth)acrylate, and dicyclopentenyl oxyethyl (meth)acrylate;
(3) (meth)acrylic acid esters having an aromatic ring such as benzoyl oxyethyl (meth)acrylate, benzyl (meth)acrylate, phenyl ethyl (meth)acrylate, phenoxyethyl (meth)acrylate, phenoxydiethylene glycol (meth)acrylate, and 2-hydroxy-3-phenoxypropyl (meth)acrylate;
(4) acrylic acid esters having a hydroxyalkyl group such as (meth)acrylic acid ester having a polyalkylene glycol group such as hydroxyethyl (meth)acrylate; hydroxypropyl (meth)acrylate, hydroxybutyl (meth)acrylate, glycerol (meth)acrylate; lactone-modified hydroxyethyl (meth)acrylate, polyethylene glycol (meth)acrylate, and polypropylene glycol (meth)acrylate;
(5) unsaturated dicarboxylic acid esters such as dimethyl fumarate, diethyl fumarate, dibutyl fumarate, dimethyl itaconate, dibutyl itaconate, methyl ethyl fumarate, methyl butyl fumarate, and methyl ethyl itaconate;
(6) styrene derivatives such as styrene, $\alpha$-methyl styrene, and chlorostyrene;
(7) diene-based compounds such as butadiene, isoprene, piperylene, dimethyl butadiene;
(8) vinyl halides or vinylidene halides such as vinyl chloride and vinyl bromide;
(9) unsaturated ketones such as methyl vinyl ketone and butyl vinyl ketone;
(10) vinyl esters such as vinyl acetate and vinyl butyrate;
(11) vinyl ethers such as methyl vinyl ether and butyl vinyl ether;
(12) vinyl cyanides such as acrylonitrile, methacrylonitrile, and vinylidene cyanide;
(13) acrylamide or alkyd-substituted amides thereof;
(14) N-substitute maleimides such as N-phenyl maleimide and N-cyclohexyl maleimide;
(15) fluorine-containing ethylenically unsaturated monomers such as fluorine-containing $\alpha$-olefins such as vinyl fluoride, vinylidene fluoride, trifluoroethylene, chlorotrifluoroethylene, bromotrifluoroethylene, pentafluoropropylene, or hexafluoropropylene; or (per)fluoroalkyl/perfluorovinyl ethers having a (per)fluoroalkyl group having 1 to 18 carbon atoms such as trifluoromethyl trifluorovinyl ether, pentafluoroethyl trifluorovinyl ether, or heptafluoropropyl trifluorovinyl ether; and (per)fluoroalkyl (meth)acrylates having a (per)fluoroalkyl group having 1 to 18 carbon atoms such as 2,2,2-trifluoroethyl (meth)acrylate, 2,2,3,3-tetrafluoropropyl (meth)acrylate, 1H,1H,5H-octafluoropentyl (meth)acrylate, 1H,1H,2H,2H-heptadecafluorodecyl (meth)acrylate, or perfluoroethyl oxyethyl (meth)acrylate;

(16) silyl group-containing (meth)acrylates such as γ-methacryloxypropyl trimethoxysilane; and
(17) N,N-dialkyl aminoalkyl (meth)acrylate such as N,N-dimethyl aminoethyl (meth)acrylate, N,N-diethyl aminoethyl (meth)acrylate, or N,N-diethyl aminopropyl (meth)acrylate.

The polymer having a carboxyl group is obtained by polymerization or copolymerization using a known method, and the polymerization form thereof is not particularly limited. In addition, the polymer can be produced in the presence of a catalyst (a polymerization initiator) by addition polymerization, and may be a polymer such as a random copolymer, a block copolymer, or a graft copolymer. In addition, as a copolymerization method, a known polymerization method such as a bulk polymerization method, a solution polymerization method, a suspension polymerization method, and an emulsion polymerization method can be used.

<Resin Layer (A) Containing Heteroatom Compound Having Dehydration-Condensation Properties and Polymer Having Carboxyl Group>

The resin layer (A) containing the heteroatom compound having dehydration-condensation properties and the polymer having a carboxyl group may contain a compound other than the heteroatom compound having dehydration-condensation properties and the polymer having a carboxyl group within a range where the effect of the invention is obtained. As such an additionally added component, alcohol such as methanol, ethanol, propanol, butanol, and hexanol, a solvent such as ethylene glycol, propylene glycol, and glycerin, and an additive such as a coupling agent, a silane compound, a phosphoric acid compound, an organic filler, an inorganic filler, a stabilizer (an antioxidant, a thermal stabilizer, an ultraviolet absorber, and the like), a plasticizer, an antistatic agent, a lubricant, an antiblocking agent, a colorant, a crystal nucleation agent, an oxygen scavenger (a compound having an oxygen scavenging function), and a tackifier can be used.

<Gas Barrier Film>

The invention relates to the gas barrier film. Here, the gas barrier indicates a function of blocking the permeation of the air such as oxygen. In addition, the gas barrier film in the invention indicates a film having gas barrier properties of which the oxygen permeability is 1 cc/m$^2$·atm·da or less.

<Resin Layer (B) Containing Polyvalent Metal Compound>

In the gas barrier film of the invention, a resin layer (B) containing a polyvalent metal compound may be further provided to be adjacent to the resin layer (A). Here, "adjacent" indicates that there is at least a direct contact portion between the resin layer (A) and the resin layer (B).
The polyvalent metal compound contained in the resin layer (B) is a divalent or higher metal compound, and is mixed with a water-soluble polymer or the like to form the resin layer (B). Examples of such a polyvalent metal compound include a zinc compound, a magnesium compound, a calcium compound, a manganese compound, an iron compound, a cobalt compound, a nickel compound, a copper compound, and the like, and the zinc compound, the magnesium compound, and the calcium compound are particularly preferable. Only one type of such metal compounds may be used alone, or two or more types thereof may be used together.
The polyvalent metal compound that may be used in the invention is preferably an oxide, a hydroxide, and a carbonate of a divalent metal, and may be a mixture thereof. As such a divalent metal compound, a zinc oxide, a magnesium oxide, and a calcium oxide are preferable, and the zinc oxide and the magnesium oxide are particularly preferable.
It is preferable that the polyvalent metal compound is in the shape of particles. Fine particles having an average particle diameter of 500 nm or less and 10 nm or more are more preferable. Fine particles of 20 nm to 300 nm are particularly preferable. Here, the average particle diameter is measured by a dynamic light scatting nanoparticle size analyzer, for example, LB-500 (manufactured by HORIBA, Ltd.).
The content of the polyvalent metal compound in the resin layer (B) containing the polyvalent metal compound is preferably in a range of 40 to 90 parts by mass, and particularly preferably in a range of 60 to 80 parts by mass since the gas barrier properties can be improved.
In addition to the polyvalent metal compound, a resin for stably coating the polyvalent metal compound is added to the resin layer (B) containing the polyvalent metal compound. Specifically, examples of the resin include a cellulose-based resin, an ethyl cellulose resin, a carboxymethyl cellulose resin, a polyester resin, an epoxy resin, an acrylic resin, a methacrylic resin, a polyamide-based resin, a polyether polyurethane polyol resin, a polyester polyol resin, a polyurethane polyol resin, and the like. Such resins may be used alone, or a plurality thereof may be used together. Among them, the ethyl cellulose resin, the polyether polyurethane polyol resin, the polyester polyol resin, and the polyurethane polyol resin are preferable.

The content of the resin in the resin layer (B) containing the polyvalent metal compound is preferably in a range of 10 to 60 parts by mass, and particularly preferably in a range of 20 to 40 parts by mass since the coatability of the resin layer (B) is excellent.

<Layer (C) Containing Compound Selected from Group Consisting of Aluminum Oxide, Silicon Oxide, and Silicon Nitride>

In the gas barrier film of the invention, a layer (C) containing a compound selected from the group consisting of an aluminum oxide, a silicon oxide, and a silicon nitride may be further provided to be adjacent to the resin layer (A). Here, "adjacent" indicates that there is at least a direct contact portion between the resin layer (A) and the layer (C).

In the invention, the layer (C) provided to be adjacent to the resin layer (A) is a layer formed by performing a treatment such as vapor deposition, sputtering, and CVD with respect to the compound selected from the group consisting of the aluminum oxide, the silicon oxide, and the silicon nitride. Such a layer (C) may be formed on a base material film such as a polyethylene terephthalate (PET) resin film, a polypropylene (PP) resin film, a polybutylene terephthalate (PBT) resin film, a nylon (NY) resin film, and a biomass film, and as such a base material film, a film produced by a known various treatment, such as a biaxially stretched film, a stretched film, and an unstretched film, and as necessary, films subjected to various surface treatments may be used.

<Multilayer Body>

The gas barrier film of the invention may be a multilayer body by variously combining the resin layer (A) containing the heteroatom compound having dehydration-condensation properties and the polymer having a carboxyl group, the resin layer (B) or the layer (C), and other base materials, films, coated layers of an additive such as a coating agent, and the like.

<Other Base Materials>

The material of the other base materials to be used is not particularly limited, and may be suitably selected in accordance with the purpose, examples thereof include wood, a metal, a metal oxide, plastic, paper, silicon or modified silicon, and the other base materials may be a base material obtained by joining different materials. The shape of the base material is not particularly limited, and may be any shape according to the purpose, such as a flat-plate shape, a sheet shape, or a three-dimensional shape with a curvature on all or a part of the surface. In addition, the hardness, the thickness, and the like of the base material are not also limited. In addition, in a case where a multilayer body according to the invention is used as a packaging material, paper, plastic, a metal, a metal oxide, and the like may be used as the base material.

In the case of producing the multilayer body according to the invention by using a coating agent, a coating method of the coating agent is not particularly limited, and a known and conventional coating method can be used. Examples of the coating method include a spraying method, a spin coating method, a dipping method, a roll coating method, a blade coating method, a doctor roll method, a doctor blade method, a curtain coating method, a slit coating method, a screen printing method, an inkjet method, and a dispensing method.

The coated layer obtained by coating the coating agent is dried after coating, and thus, the ionic bond in the coated layer is dense. Accordingly, it is preferable that a drying step is provided after coating. The drying step may be room-temperature drying, or forced drying such as heating, depressurizing, and blowing may be performed.

<Additives>

The gas barrier film of the invention may contain various additives within a range where the effect of the invention is not impaired. As the additive, for example, a coupling agent, a silane compound, a phosphoric acid compound, an organic filler, an inorganic filler, a stabilizer (an antioxidant, a thermal stabilizer, an ultraviolet absorber, and the like), a plasticizer, an antistatic agent, a lubricant, an antiblocking agent, a colorant, a crystal nucleation agent, an oxygen scavenger (a compound having an oxygen scavenging function), a tackifier, and the like can be exemplified. Only one type of such various additives may be used alone, or two or more types thereof may be used in combination.

As the coupling agent, a known and conventional coupling agent is used, and examples thereof include a silane coupling agent, a titanium coupling agent, a zirconium coupling agent, and an aluminum coupling agent.

As the silane coupling agent, a known and conventional silane coupling agent may be used, and examples thereof include an epoxy group-containing silane coupling agent such as 3-glycidoxypropyl trimethoxysilane, 3-glycidoxypropyl triethoxysilane, 3-glycidoxypropyl methyl diethoxysilane, and 2-(3,4-epoxy cyclohexyl) ethyl trimethoxysilane; an amino group-containing silane coupling agent such as 3-aminopropyl trimethoxysilane, N-2-(aminoethyl)-3-aminopropyl methyl dimethoxysilane, 3-triethoxysilyl-N-(1,3-dimethyl butylidene) propyl amine, and N-phenyl-γ-aminopropyl trimethoxysilane; a (meth)acryloyl group-containing silane coupling agent such as 3-acryloxypropyl trimethoxysilane and 3-methacryloxypropyl triethoxysilane; and an isocyanate group-containing silane coupling agent such as 3-isocyanate propyl triethoxysilane.

Examples of the titanium coupling agent include isopropyl triisostearoyl titanate, isopropyl trioctanoyl titanate, isopropyl dimethacryl isostearoyl titanate, isopropyl isostearoyl diacryl titanate, isopropyl tris(dioctyl pyrophosphate) titanate, tetraoctyl bis(ditridecyl phosphate) titanate, tetra(2,2-diallyl oxymethyl-1-butyl) bis(ditridecyl) phosphatetitanate, bis(dioctyl pyrophosphate) oxyacetate titanate, and bis(dioctyl pyrophosphate) ethylene titanate.

Examples of the zirconium coupling agent include zirconium acetate, ammonium zirconium carbonate, and zirconium fluoride.

Examples of the aluminum coupling agent include acetoalcoxyaluminum diisopropylate, aluminum diisopropoxymonoethyl acetoacetate, aluminum trisethyl acetoacetate, and aluminum trisacetyl acetonate.

Examples of the silane compound include alkoxysilane, silazane, and siloxane. Examples of the alkoxysilane include methyl trimethoxysilane, dimethyl dimethoxysilane, phenyl trimethoxysilane, methyl triethoxysilane, dimethyl diethoxysilane, phenyl triethoxysilane, n-propyl trimethoxysilane, n-propyl triethoxysilane, hexyl trimethoxysilane, hexyl triethoxysilane, octyl triethoxysilane, decyl trimethoxysilane, 1,6-bis(trimethoxysilyl) hexane, and trifluoropropyl trimethoxysilane. Examples of the silazane include hexamethyl disilazane. Examples of the siloxane include hydrolyzable group-containing siloxane.

Among the additives, examples of the inorganic filler include an inorganic substance such as a metal, a metal oxide, a resin, and a mineral, and a complex thereof. Specific examples of the inorganic filler include silica, alumina, titanium, zirconia, copper, iron, silver, mica, talc, an aluminum flake, a glass flake, and a clay mineral.

Examples of the compound having an oxygen scavenging function include a low-molecular-weight organic compound that reacts with oxygen, such as a hindered phenol-based compound, vitamin C, vitamin E, an organic phosphorus compound, a gallic acid, and pyrogallol, and a transition metal compound such as cobalt, manganese, nickel, iron, and copper.

Examples of the tackifier include a xylene resin, a terpene resin, a phenol resin, and a rosin resin. By adding the tackifier, it is possible to improve tackiness with respect to various base materials immediately after application. It is preferable that the added amount of the tackifier is 0.01 to 5 parts by mass with respect to 100 parts by mass of the total amount of the resin composition.

The multilayer body according to the invention may be a multilayer body including multiple layers in which an upper layer portion is further multilayered on the base material and the coated layer. In this case, the upper layer portion may be multilayered before the coating agent is dried, or may be multilayered after the coating agent is dried. The upper layer portion is not particularly limited, and wood, a metal, a metal oxide, plastic, paper, silicon or modified silicon, and the like may be multilayered. In addition, an uncured resin solution may be applied from the coated layer, and cured or dried to form the upper layer portion.

As the gas that can be blocked by the gas barrier film or the multilayer body of the invention, oxygen, carbon dioxide, nitrogen, inert gas such as argon, an alcohol component such as methanol, ethanol, and propanol, phenols such as phenol and cresol, and aroma components containing a low-molecular-weight compound, for example, an aroma component contained in a soy sauce, a sauce, a bean paste, limonene, menthol, methyl salicylate, coffee, cocoa, a shampoo, or a conditioner, can be exemplified.

<Packaging Material and Packaging Material for Heat Sterilization>

The gas barrier film and the multilayer body of the invention have excellent gas barrier properties, and thus, can be preferably used as a packaging material that requires the gas barrier properties. In particular, since food, a daily commodity, an electronic material, a medical purpose, or the like requires high barrier properties, a packaging material of the invention can be preferably used. Further, the gas barrier film and the multilayer body are also excellent in heat resistance and moist-heat resistance, and thus, can also be preferably used as a packaging material for heat sterilization such as boiling or retorting.

EXAMPLES

Hereinafter, the invention will be described in detail by using Examples and Comparative Examples, but the invention is not limited only to Examples.

In the following description, the resin layer (A) in the present application will be referred to as an MC layer, and the resin layer (B) in the application will be referred to as a TC layer.

(Adjusted Liquid 1: Preparation of PAA Solution)

In a flask, 30 g of a polyacrylic acid (hereinafter, may be abbreviated as PAA) having a number average molecular weight of 200000 (manufactured by TOAGOSEI CO., LTD., Aron A-10H) was dissolved in isopropyl alcohol (hereinafter, may be abbreviated as IPA) while being stirred and boiled to obtain a PAA solution with a solid content concentration of 3%.

(Adjusted Liquid 2: Preparation of PVA Solution)

In a flask, 30 g of a powder of polyvinyl alcohol (hereinafter, may be abbreviated as PVA) (manufactured by Kuraray Co., Ltd., KURARAY POVAL) was dissolved in water while being stirred and heated at 60°C to obtain a PVA solution with a solid content concentration of 3%.

(Adjusted Liquid 3: Preparation of IPA Solution of Phosphoric Acid)

An aqueous solution of a concentrated phosphoric acid (manufactured by Tokyo Chemical Industry Co., Ltd., a solid content of 86%) was diluted with IPA to prepare an IPA solution of a phosphoric acid with a solid content of 5%.

(Adjusted Liquid 4: Preparation of IPA Solution of Sulfuric Acid)

An aqueous solution of a concentrated sulfuric acid (manufactured by Tokyo Chemical Industry Co., Ltd., a solid content of 95%) was diluted with IPA to prepare an IPA solution of a sulfuric acid with a solid content of 5%.

(Adjustment Example 5: Preparation of IPA Solution of Nitric Acid)

An aqueous solution of a concentrated nitric acid (manufactured by Tokyo Chemical Industry Co., Ltd., defined as 1 N) was diluted with IPA to prepare an IPA solution of a nitric acid with a solid content of 5%.

(Adjustment Example 6: Preparation of IPA Solution of Hydrochloric Acid)

An aqueous solution of a concentrated hydrochloric acid (manufactured by Tokyo Chemical Industry Co., Ltd., defined as 1 N) was diluted with IPA to prepare an IPA solution of a hydrochloric acid with a solid content of 5%.

(Preparation of MC Solution for Resin Layer (A))

The solutions of the created liquids of Adjustment Examples 1 to 6 were compounded in accordance with Table 1 to prepare MC solutions 1 to 6.

(Adjusted Liquid 7 for Resin Layer (B): Preparation of TC7 Solution)

300 g of zinc oxide (hereinafter, may be abbreviated as ZnO) with a primary particle diameter of 200 nm (manufactured by SAKAI CHEMICAL INDUSTRY CO., LTD., FINEX-50) and 700 g of IPA were mixed, and subjected to a dispersion treatment for 1 hour by using zirconia beads with a diameter of 0.3 mm in a bead mill (manufactured by KOTOBUKIKAKOU CO., LTD., Ultra Apex Mill UAM-015), and then, the beads were sieved to obtain a ZnO solution with a solid content concentration of 30%. The primary particle diameter of ZnO in the dispersion liquid was 88 nm. Such a solution, an ethyl cellulose resin (Product Name: ETHOCEL, manufactured by Nissin Kasei Co., Ltd.) solution with a solid content of 5% dissolved in IPA, and the IPA solution were mixed and stirred to obtain a ZnO dispersion liquid. As a mixing ratio, the ZnO solution was 20 g, the ethyl cellulose resin solution was 20 g, and IPA was 60 g. The ethyl cellulose resin, the IPA solution, and a stirrer were put in advance in 200 ml of a beaker, the stirrer was rotated at a rotation number of 200 rpm, and the ZnO solution was put after checking that the ethyl cellulose resin and the IPA were homogeneous to obtain a TC7 solution in which ZnO was dispersed. A solid content was 7%.

(Adjusted Liquid 8 for Resin Layer (B): Preparation of TC8 Solution)

240 g of ZnO with a primary particle diameter of 200 nm and 760 g of methyl ethyl ketone (hereinafter, may be abbreviated as MEK) were mixed, and subjected to a dispersion treatment for 1 hour by using zirconia beads with a diameter of 0.3 mm in a bead mill, and then, the beads were sieved to obtain a ZnO solution with a solid content concentration of 24%. The primary particle diameter of ZnO in the dispersion liquid was 150 nm. 39 g of such a solution, 1 g of a polyether polyurethane polyol resin solution A, and 60 g of MEK were mixed and stirred with a magnetic stirrer to obtain a TC8 solution in which ZnO was dispersed. A solid content was 10%.

The used polyether polyurethane polyol resin solution A was obtained as follows. 213.7 parts of divalent polypropylene glycol (hereinafter, may be abbreviated as PPG) with a molecular weight of 400, 225.2 parts of divalent PPG with a molecular weight of 700, 69.0 parts of divalent PPG with a molecular weight of 2000, and 41.1 parts of trivalent PPG with a molecular weight of 430 were charged in a reaction container provided with a stirring machine, a nitrogen gas introduction pipe, and a rectification pipe, 152.6 parts of tolylene diisocyanate was put therein while being stirred, 306.0 parts of ethyl acetate was put therein after the temperature reached at 90°C, and synthesis was performed by maintaining a reaction temperature at 90°C. It was checked that NCO (%) was 0.1% or less, and a viscosity according to a B-type viscometer fell within 2000 to 3000 mPa, and the polyether polyurethane polyol resin solution A was obtained.

(Adjusted Liquid 9 for Resin Layer (B): Preparation of TC9 Solution)

A TC9 solution in which ZnO was dispersed was obtained as with the adjusted liquid 8 except that the polyether polyurethane polyol resin solution A was changed to a polyester polyol resin solution B.

The used polyester polyol resin solution B was obtained as follows.

1850 parts of a phthalic acid anhydride, 352.4 parts of ethylene glycol, 731.9 parts of glycerol, 0.34 parts of titanium tetraisopropoxide, and 1956.2 parts of ethyl acetate were charged in a reaction container provided with a stirring machine, a nitrogen gas introduction pipe, a rectification pipe, a water separator, and the like, and gradually heated such that the upper temperature of the rectification pipe did not exceed 100°C, and the inner temperature was retained at 220°C. When the acid value was 10 mgKOH/g or less, heating was continuously performed at 100 torr under a reduced pressure, an esterification reaction was completed at the acid value of 2 mgKOH/g or less, and the polyester polyol resin solution B was obtained.

(Adjusted Liquid 10 for Resin Layer (B): Preparation of TC10 Solution)

A TC10 solution in which ZnO was dispersed was obtained as with the adjusted liquid 8 except that the polyether polyurethane polyol resin solution A was changed to a polyurethane polyol resin solution C.

The polyurethane polyol resin solution C was obtained as follows.

252.8 parts of a phthalic acid anhydride, 62.0 parts of ethylene glycol, 128.6 parts of neopentyl glycol, 105.8 parts of 1,6-hexanediol, and 298.6 parts of ethyl acetate were charged in a reaction container provided with a stirring machine, a nitrogen gas introduction pipe, a rectification pipe, a water separator, and the like, and esterification was performed. After the esterification was completed, 18.2 g of isophorone diisocyanate and 109.6 parts of ethyl acetate were charged to allow urethanization to progress, and when the acid value was 1 mgKOH/g or less, the urethanization reaction was completed, and the polyurethane polyol resin solution C was obtained.

(Formation of MC Layer that is Resin Layer (A))

An AlOx side of an AlOx-OPP film (a thickness of 16 $\mu$m, Product Number: 160894), manufactured by Jindal, was coated with the obtained MC solutions 1 to 6. The coating was performed by using a bar coater No. 10, manufactured by Tomoe Kogyo Co., Ltd. After coating, drying was performed with a dryer in the condition of 85°C for 1 minute to obtain a film in which the MC layer was formed. The applied amount of the MC solution was 0.3 to 0.5 g/m$^2$.

Here, the AlOx-OPP film is a film in which an aluminum oxide (AlOx) was deposited on an OPP film.

(Preparation of TC Layer/MC Layer/AlOx-OPP Film)

For the film in which the MC layer was formed, the formed MC layer was coated with the adjusted TC solution (TC7 to 10). The coating of the TC solution was performed by using a bar coater, yellow (Wet Film Thickness: 4 $\mu$m), manufactured by Matsuo Sangyo Co., Ltd. After coating, drying was performed with a dryer in the condition of 85°C for 1 minute to obtain a film F in which the MC layer and the TC layer were adjacent to each other. The layer configuration of the film F is in the order of TC Layer/MC Layer/AlOx-OPP Film, and "/" indicates that the layers are adjacent to each other.

The applied amount of the TC solution was in a range of 0.3 to 0.5 g/m$^2$.

(Preparation of Laminate Film)

The TC layer side of the film F obtained in the above step was coated with a laminate bonding agent, and a CPP film (manufactured by TOYOBO CO., LTD., PYLEN P1128, a thickness of 30 $\mu$m) was pasted to prepare a laminate film. As the laminate bonding agent, DICDRY: LX-401A (a polyol material) and DICDRY: KW-75 (a polyisocyanate material), manufactured by DIC Corporation, were used by being mixed at a predetermined ratio, and coating was performed such that the applied amount was in a range of 1.5 to 2.0 g/m$^2$. The aging of the laminate film was performed at 40°C for 3 days.

(Evaluation 1 of Laminate Film: Measurement of Bonding Strength)

The bonding strength of the laminate film was evaluated on the basis of a test of JIS K 6854-3:1999 "Bonding Agent-Peeling Bonding Strength Test Method-Part 3: T-Type Peeling". The test was performed at a tensile rate of 300 mm/min by using a tensile tester (Product Number: STD-1225S), manufactured by A&D Company, Limited. The unit of the bonding strength is N/15 mm. The evaluation was performed in the following 5-level evaluation.

[Evaluation Criteria]

    5: 1.5 (N/15 mm) or more or film fracture
    4: 1.0 (N/15 mm) or more and less than 1.5 (N/15 mm)
    3: 0.7 (N/15 mm) or more and less than 1.0 (N/15 mm)
    2: 0.3 (N/15 mm) or more and less than 0.7 (N/15 mm)
    1: to less than 0.3 (N/15 mm)

(Evaluation 2 of Laminate Film: Evaluation of Oxygen Permeability)

An oxygen permeability was measured on the basis of JIS K 7126-2 "Plastic-Film and Sheet-Gas Permeability Test Method-Part 2: Isopiestic Method", in the condition of 23°C and each relative humidity of 0% and 90%. As a measurement device, OXTRAN2/21, manufactured by MOCON, was used. The unit of the oxygen permeability is cc/m$^2$·atm·day. The evaluation was performed in the following 5-level evaluation.

    5: 0.5 cc/m$^2$·atm·day or less
    4: greater than 0.5 cc/m$^2$·atm·day and 1.0 cc/m$^2$·atm·day or less
    3: greater than 1.0 cc/m$^2$·atm·day and 5.0 cc/m$^2$·atm·day or less
    2: greater than 5.0 cc/m$^2$·atm·day and 10.0 cc/m$^2$·atm·day or less
    1: greater than 10.0 cc/m$^2$·atm·day

In Table 1, the compounding of the MC solution, the metal compound name and the resin name of the TC layer, and the bonding strength and the oxygen permeability of the laminate film obtained by preparing the laminate film were shown. Note that, in the table, the number represents parts, and the blank represents an uncompounded state.

[Table 1]

| Table 1 | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Resin Layer (A) MC Layer | MC Solution Name | MC1 | MC2 | MC3 | MC | MC1 | MC 1 | MC4 | MC5 | MC6 |
| | PAA Solution | 100.0 | 100.0 | 100.0 | 100.0 | 100.0 | 100.0 | 100.0 | 100.0 | |
| | PVA Solution | | | | | | | | | 100.0 |
| | IPA Solution of Phosphoric Acid | 3.0 | | | 3.0 | 3.0 | 3.0 | | | 3.0 |
| | IPA Solution of Sulfuric Acid | | 3.0 | | | | | | | |
| | IPA Solution of Nitric Acid | | | 3.0 | | | | | | |
| | IPA Solution of Hydrochloric Acid | | | | | | | | 3.0 | |
| Resin Layer (B) TC Layer | TC Solution Name | TC7 | TC7 | TC7 | TC8 | TC9 | TC10 | TC7 | TC7 | TC7 |
| | Polyvalent Metal Compound | ZnO | ZnO | ZnO | ZnO | ZnO | ZnO | ZnO | ZnO | ZnO |
| | Resin | Ethyl Cellulose Resin | Ethyl Cellulose Resin | Ethyl Cellulose Resin | Polyether Polyurethane Polyol Resin | Polyester Polyol Resin | Polyurethane Polyol Resin | Ethyl Cellulose Resin | Ethyl Cellulose Resin | Ethyl Cellulose Resin |
| Bonding Strength | | 5 | 5 | 5 | 5 | 5 | 5 | 1 | 1 | 1 |
| Oxygen Permeability | 23°C 0% | 5 | 5 | 5 | 5 | 5 | 5 | 5 | 5 | 5 |
| | 23°C 90% | 5 | 5 | 5 | 5 | 5 | 5 | 5 | 5 | 1 |

From the results of Examples, it was found that the film including the MC layer in which the PAA solution and the phosphoric acid, the sulfuric acid, or the nitric acid were compounded had an excellent bonding strength after laminate, and the obtained laminate film exhibited an excellent oxygen permeability. The oxygen permeability is considered to be the result of a cross-linking reaction progressing between the PAA resin of the MC layer and ZnO of the TC layer. In Examples 4 to 6, even in the case of changing the resin material used in the TC layer, it was possible to check an excellent bonding strength and an excellent oxygen permeability.

On the other hand, in Comparative Examples 1 to 3, an excellent bonding strength was not obtained. For Comparative Example 1, it is assumed that the effect of improving the bonding strength was not sufficient since the MC layer contained only PAA. For Comparative Example 2, it was assumed that since the hydrochloric acid was used as a heteroatom-containing compound, and the chlorine itself was a monovalent anion and was not capable of forming a covalent bond with the AlOx layer. For Comparative Example 3, the bonding strength was low since PVA was used in the resin, and the dehydration-condensation with the AlOx layer did not occur, and the barrier properties at a humidity of 90% were degraded since the cross-linking reaction did not progress between the MC layer and the TC layer.

## Claims

1. A gas barrier film, comprising
a resin layer (A) containing a heteroatom compound having dehydration-condensation properties and a polymer having a carboxyl group.

2. The gas barrier film according to claim 1, further comprising

a resin layer (B) containing a polyvalent metal compound to be adjacent to the resin layer (A),
wherein a resin for forming the resin layer (B) is one or more types selected from an ethyl cellulose resin, a polyether polyurethane polyol resin, a polyester polyol resin, and a polyurethane polyol resin.

3. The gas barrier film according to claim 1, further comprising
a layer (C) containing a compound selected from the group consisting of an aluminum oxide, a silicon oxide, and a silicon nitride to be adjacent to the resin layer (A).

4. The gas barrier film according to claim 1,
wherein the polymer having a carboxyl group is one or more types of polymers selected from the group consisting of an acrylic acid, a methacrylic acid, a maleic acid, and an itaconic acid.

5. The gas barrier film according to claim 1,
wherein the heteroatom compound having dehydration-condensation properties is one or more types selected from the group consisting of a phosphoric acid, a sulfuric acid, and a nitric acid.

6. The gas barrier film according to claim 2,
wherein the polyvalent metal compound is one or more types selected from an oxide, a hydroxide, and a carbonate of a polyvalent metal selected from zinc, magnesium, and calcium.

7. The gas barrier film according to claim 2,
wherein the polyvalent metal compound is at least one type selected from zinc oxide, magnesium oxide, and calcium oxide.

8. A multilayer body, comprising
the gas barrier film according to any one of claims 1 to 7.

9. A packaging material, comprising
the gas barrier film according to any one of claims 1 to 7.

10. A packaging material for heat sterilization, comprising
the gas barrier film according to any one of claims 1 to 7.

## INTERNATIONAL SEARCH REPORT

| International application No. |
|---|
| **PCT/JP2022/043263** |

### A. CLASSIFICATION OF SUBJECT MATTER

*C08J 7/048*(2020.01)i; *B32B 27/08*(2006.01)i; *C08K 3/28*(2006.01)i; *C08K 3/30*(2006.01)i; *C08K 3/32*(2006.01)i; *C08L 33/00*(2006.01)i; *C08L 35/00*(2006.01)i

FI: C08J7/048; C08L35/00; C08L33/00; C08K3/32; C08K3/28; C08K3/30; B32B27/08

According to International Patent Classification (IPC) or to both national classification and IPC

### B. FIELDS SEARCHED

Minimum documentation searched (classification system followed by classification symbols)

C08J7/04-7/06; B32B1/00-43/00; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-079597 A (TOPPAN PRINTING CO LTD) 27 May 2021 (2021-05-27) entire text, in particular, claims, paragraphs [0112]-[0153], fig. 4 | 1, 4, 5, 8-10 |
| X | JP 2021-133606 A (TOPPAN PRINTING CO LTD) 13 September 2021 (2021-09-13) entire text, in particular, claims, paragraphs [0091]-[0110], fig. 5 | 1, 4, 5, 8-10 |
| X | JP 2018-126971 A (TOPPAN PRINTING CO LTD) 16 August 2018 (2018-08-16) entire text, in particular, claims, paragraphs [0090]-[0100], fig. 5 | 1, 4, 5, 8-10 |
| A | JP 2017-217845 A (TOYO SEIKAN GROUP HOLDINGS LTD) 14 December 2017 (2017-12-14) entire text | 1-10 |
| A | JP 2007-112114 A (UNITIKA LTD) 10 May 2007 (2007-05-10) entire text | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 January 2023** | **24 January 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/043263**

| Patent document cited in search report | | | Publication date (day/month/year) | Patent family member(s) | | | Publication date (day/month/year) |
|---|---|---|---|---|---|---|---|
| JP | 2021-079597 | A | 27 May 2021 | (Family: none) | | | |
| JP | 2021-133606 | A | 13 September 2021 | (Family: none) | | | |
| JP | 2018-126971 | A | 16 August 2018 | (Family: none) | | | |
| JP | 2017-217845 | A | 14 December 2017 | (Family: none) | | | |
| JP | 2007-112114 | A | 10 May 2007 | US | 2010/0151265 | A1 | |
| | | | | entire text | | | |
| | | | | WO | 2007/034940 | A1 | |
| | | | | EP | 1930153 | A1 | |
| | | | | KR | 10-2008-0063788 | A | |
| | | | | CN | 101272906 | A | |
| | | | | TW | 200728072 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007112114 A